# EUROPEAN PATENT APPLICATION

(11) **EP 4 814 947 A1**
(43) Date of publication of application: **30.09.2026**
(21) Application number: 25768625.3
(22) Date of filing: 05.03.2025
(51) Int. Cl.: G10H 1/00, G06F 40/40

(54) **SYMBOLIC MUSIC GENERATION METHOD AND SYSTEM USING LANGUAGE MODEL**

(30) Priority: 07.03.2024 KR 20240032323; 25.02.2025 KR 20250024581
(71) Applicant: LG Management Development Institute Co., Ltd., Seoul 07336 (KR)
(72) Inventor: YOO, Seungyeon, Yongin-si Gyeonggi-do 16862 (KR); YANG, Kichang, Gunpo-si Gyeonggi-do 15802 (KR); CHO, Sungjun, Seoul 06544 (KR); KIM, Jaehyeon, Seoul 06754 (KR)
(74) Representative: BCKIP Part mbB
(86) International application number: PCT/KR2025/002930
(87) International publication number: WO 2025/188069

(57) **Abstract**

A system for generating symbolic music using a language model of the present invention encodes music data to generate input tokens from input digital music protocol data, performs one or more structural embeddings from the input tokens, and generates a next output token by concatenating a result of an input token embedding and a result of the structural embedding and inputting the result into the language model, wherein the one or more structural embeddings may be initialized before the language model starts training.

## Description

### [Technical Field]

The present invention relates to a method and a system for generating symbolic music, and more particularly, to a method and a system for generating symbolic music using a large language model that uses a structural embedding.

### [Background Art]

Recently, artificial intelligence (AI) technology has shown advanced development and is attracting attention across society. AI refers to the execution by a computer of intellectual abilities unique to humans at a high level of capability, such as "a computer brain that performs domains achievable by human intelligence," "engineering and science for making intelligent machines," "a set of algorithms designed to think, perceive, and act like a human," and the like.

AI is introduced as providing a highly integrated smart space in combination with augmented reality, Internet of Things, edge computing, and digital twin, and the like and is emphasized as a core new technology leading the era of the Fourth Industrial Revolution. In addition, AI is drawing attention as a next-generation growth engine that can evolve the industrial ecosystem beyond standardized problem-solving, and is actively applied not only to IT, medical care, agriculture, energy, automobiles, and robots, but also to knowledge service industries such as distribution, finance, law, education, real estate, advertising, and communication. That is, AI is preparing for a new era by being combined with all existing systems ranging from industries aimed at improving convenience or quality of life to overall cultural and artistic aspects of our society.

Furthermore, even in the field of artistic creation, which was previously considered to be beyond the capabilities of AI, revolutionary outcomes have emerged, and various experiments such as composition, performance, and voice imitation are being conducted in the field of music.

However, since such conventional AI composition technologies simply generate composition results according to predetermined patterns, there is a problem in that the emotions or situational expressions of a user are not faithfully reflected.

OpenAI Blog "MuseNet" (https://openai.com/index/musenet/, Apr. 25, 2019)

Musebert: Pre-training music representation for music understanding and controllable generation. (ISMIR 2021, 2021.11.07, Ziyu Wang and Gus Xia)

### [Disclosure]

### [Technical Problem]

One embodiment of the present invention is directed to providing a method and a system for generating symbolic music that is more practical and reproducible, by encoding a musical structure using a structural embedding of a digital music protocol (e.g., musical instrument digital interface (MIDI)) file and utilizing a large language model.

### [Technical Solution]

A system for generating symbolic music using a language model according to one embodiment of the present invention may include at least one processor, and at least one memory configured to store instructions or information executed by the at least one processor, wherein operations performed by the instructions or information executed by the processor may include encoding music data to generate input tokens from input digital music protocol data, performing one or more structural embeddings from the input tokens, and generating a next output token by concatenating a result of an input token embedding and a result of the structural embedding and inputting the result into the language model, wherein the one or more structural embeddings may be initialized before the language model starts training.

Here, the input tokens may include at least one of N×M note-on tokens composed of N velocities and M pitch numbers, a note-off token having a velocity of 0, a time-shift token, and a special token for adjusting a beginning of a sentence, an end of a sentence, and a length of a sentence.

In addition, the one or more structural embeddings may include at least one of a part embedding indicating which time part of an entire music the input token is located in, a type embedding indicating that a type of the input token is one of a note-on token, a note-off token, a time-shift token, or a special token, a time embedding indicating an elapsed time after the time-shift token of the input token, and a Pitch-Class (PC) embedding indicating a PC of the note-on token or the note-off token.

In addition, the one or more structural embeddings may be initialized by using one of a first initialization method of randomly initializing all vectors of the one or more structural embeddings, and a second initialization method of initializing a time-related embedding among the one or more structural embeddings by using sinusoidal encoding and applying the first initialization method to a non-time-related embedding.

In addition, the first initialization method may include a method of initializing all vectors of the one or more structural embeddings by using a truncated normal distribution.

In addition, the one or more structural embeddings may include at least one of a part embedding indicating which time part in an entire music the input token is located in, a type embedding indicating that a type of the input token is one of a note-on token, a note-off token, a time-shift token, or a special token, a time embedding indicating an elapsed time after the time-shift token of the input token, and a PC embedding indicating a PC of the note-on token or the note-off token, and the second initialization method may include a method of applying sinusoidal weights to the part embedding and the time embedding to preserve continuity of sequential musical properties of notes and pitches, and a method of initializing the type embedding and the PC embedding by using a truncated normal initialization.

In addition, embeddings input to the language model may include the input token embedding, the one or more structural embeddings, and a positional embedding initialized by the first or second initialization method.

A method for generating symbolic music using a language model that generates music through a large language model according to one embodiment of the present invention may be executed by at least one processor, and may include encoding music data to generate input tokens from input digital music protocol data, performing one or more structural embeddings from the input tokens, and training to generate a next output token by concatenating a result of an input token embedding and a result of the structural embedding and inputting the result into the language model, wherein the one or more structural embeddings may be initialized before the language model starts training.

In this case, in the encoding, the input tokens may include at least one of N×M note-on tokens composed of N velocities and M pitch numbers, a note-off token having a velocity of 0, a time-shift token, and a special token for adjusting a beginning of a sentence, an end of a sentence, and a length of a sentence.

In addition, in the performing of the structural embeddings, the one or more structural embeddings may include, for the input token, at least one of a part embedding indicating which time part in an entire music the input token is located in, a type embedding indicating that a type of the input token is one of a note-on token, a note-off token, a time-shift token, or a special token, a time embedding indicating an elapsed time after the time-shift token of the input token, and a PC embedding indicating a PC of the note-on token or the note-off toke.

In addition, the one or more structural embeddings, which are initialized before the language model starts training, may be initialized by using one of a first initialization method of randomly initializing all vectors of the one or more structural embeddings, and a second initialization method of initializing a time-related embedding among the one or more structural embeddings by using sinusoidal encoding and applying the first initialization method to a non-time-related embedding.

In addition, the first initialization method may include a method of initializing all vectors of the one or more structural embeddings by using a truncated normal distribution that is initialized in the form of a probability distribution in which values smaller than a minimum value or greater than a maximum value are removed from a normal distribution.

In addition, the one or more structural embeddings may include, for the input token, at least one of a part embedding indicating which time part in an entire music the input token is located in, a type embedding indicating that a type of the input token is one of a note-on token, a note-off token, a time-shift token, or a special token, a time embedding indicating an elapsed time after the time-shift token of the input token, and a PC embedding indicating a PC of the note-on token or the note-off token, and the second initialization method may include a method of applying sinusoidal weights to the part embedding and the time embedding to preserve continuity of sequential musical properties of notes and pitches, and a method of initializing the type embedding and the PC embedding by using a truncated normal initialization.

In addition, in the training, embeddings input to the language model may include the input token embedding, the structural embedding, and a positional embedding initialized by the first or second initialization method.

A program stored in a non-transitory computer-readable recording medium according to one embodiment of the present invention may execute at least one of the methods described above on a computer.

### [Advantageous Effects]

According to an embodiment of the present invention, by applying four structural embeddings constructed from digital music protocol data (e.g., MIDI data) to a large language model, it is possible to provide a symbolic music generation system that may more effectively reproduce the structural characteristics of music.

In addition, by changing the way the structural embedding of digital music protocol data is initialized, there is an effect of generating music with the characteristics desired by the user.

### [Description of Drawings]

The above and other aspects, features, and advantages of the present disclosure will be more clearly understood from the following detailed description, taken in conjunction with the accompanying drawings.
FIG. 1 is a schematic diagram of an electronic device according to one embodiment of the present invention.
FIG. 2 is a schematic diagram of a method for generating symbolic music using a language model according to one embodiment of the present invention.
FIG. 3 is a schematic diagram showing encoding and structural embeddings of digital music protocol data according to one embodiment of the present invention.
FIG. 4 is a schematic diagram showing a training process of a symbolic music generation model using a language model according to one embodiment of the present invention.
FIG. 5 is a schematic diagram showing an inference process of music using a symbolic music generation model using a language model according to one embodiment of the present invention.

### [Modes of the Invention]

In order to clarify the technical spirit of the present disclosure, embodiments of the present invention will be described in detail with reference to the accompanying drawings. In describing the present disclosure, when it is determined that the detailed description of a related known function or component may unnecessarily obscure the gist of the present disclosure, the detailed description thereof will be omitted. In the drawings, components having substantially the same function or configuration are given the same reference numerals and symbols as possible even when they are shown in different drawings. For convenience of explanation, an apparatus and method will be described together when necessary. Each operation of the present disclosure does not necessarily need to be performed in the order described, and may be performed in parallel, selectively, or individually.

Terms used in the embodiments of the present disclosure were selected as general terms widely used at present as possible while considering functions of the present disclosure, but these terms may vary depending on the intention of those skilled in the art, legal precedents, the emergence of new technologies, or the like. In addition, in specific cases, there are terms arbitrarily selected by the applicant, and in this case, the meanings thereof will be described in detail in the description of the corresponding embodiment. Therefore, terms used in the present specification should be defined based on the meanings of the terms and the overall contents of the present disclosure rather than just the names of the terms.

Throughout the present disclosure, singular expressions may include plural expressions unless the context explicitly states otherwise. It should be understood that terms such as "comprise" or "have" are intended to specify the presence of a feature, number, step, operation, component, part, or a combination thereof, but do not preemptively preclude the possibility of the presence or addition of one or more other features, numbers, steps, operations, components, parts, or combinations thereof. That is, throughout the present disclosure, when a certain portion is described as "including," a certain component, it means further including another component rather than precluding another component unless especially stated otherwise.

Expressions such as "at least one" modify the entire list of components, and do not individually modify components of the list. For example, "at least one of A, B, and C" or "at least one of A, B, or C" refers to only A, only B, only C, both A and B, both B and C, both A and C, all of A, B, and C, or a combination thereof.

In addition, terms such as "...unit," "...module", etc. described in the present disclosure mean a unit that process at least one function or operation, which may be implemented as hardware or software, or a combination of hardware and software.

Throughout the present disclosure, when a certain portion is described as being "connected" to another portion, it includes not only a case where the certain portion is "directly connected" to another portion, but also a case where the certain portion is "electrically connected" to another portion with another element interposed therebetween. In addition, when a certain portion is described as "including" a certain component, it means further including another component rather than precluding another component unless specifically stated otherwise.

The expression "configured to (or set to)" as used throughout the present disclosure may, depending on the contexts, be used interchangeably with, for example, "suitable for," "having the capacity to," "designed to," "adapted to," "made to," or "capable of." The term "configured to (or set to)" does not necessarily mean only "specifically designed to" in hardware. Instead, in certain contexts, the expression "a system configured to" may mean that the system is "capable of" in conjunction with other apparatuses or parts. For example, the phrase "a processor configured to (or set to) perform A, B, and C" may mean a dedicated processor (e.g., an embedded processor) for performing corresponding operations, or a generic-purpose processor (e.g., a CPU or application processor) that can perform corresponding operations by executing one or more software programs stored in a memory.

AI is a field of computer engineering and information technology that studies methods for enabling a computer to perform thinking, learning, and self-development that can be performed by human intelligence, and refers to enabling a computer to imitate intelligent behavior of a human. In addition, AI does not exist by itself, but is directly or indirectly related to many other fields of computer science. In particular, in modern times, attempts to introduce AI elements into various fields of information technology and utilize the AI elements to solve problems in those fields are being very actively made.

Machine learning is a field of AI and is a study that provides the ability for a computer to learn without explicit programming. Specifically, machine learning may be described as a technology for studying and constructing systems that learn, perform prediction, and improve their own performance based on empirical data, and algorithms therefor. Algorithms of machine learning do not execute strictly predetermined static program instructions, but rather adopt an approach of constructing a specific model to derive a prediction or decision based on input data. The term "machine learning" may be used interchangeably with the term "mechanical learning."

With respect to how to classify data in machine learning, a variety of machine learning algorithms have been developed. Representative examples include decision trees, Bayesian networks, support vector machines (SVM), and artificial neural networks (ANNs). The decision tree is an analytical method that performs classification and prediction by visualizing decision rules in a tree structure. A Bayesian network is a model that represents probabilistic relationships (conditional independence) among multiple variables in a graph structure. The Bayesian network is suitable for data mining through unsupervised learning. The SVM is a model of supervised learning for pattern recognition and data analysis, and is mainly used for classification and regression. The ANN models the operating principle of biological neurons and the connection relationship between neurons, and is an information processing system in which multiple neurons, referred to as nodes or processing elements, are connected in the form of a layer structure.

The ANN is a model used in machine learning and may be described as a statistical learning algorithm inspired by neural networks (particularly the brain in the central nervous system of animals) in biology in machine learning and cognitive science. Specifically, the ANN may refer to an overall model in which artificial neurons (nodes) forming a network through synaptic connections change synaptic connection strengths through training, thereby having a problem-solving capability. The term "ANN" may be used interchangeably with the term "neural network."

The ANN may include a plurality of layers, and each of the layers may include a plurality of neurons. In addition, the ANN may include synapses connecting neurons to neurons. The ANN may generally be defined by the following three factors: (a) a connection pattern between neurons of different layers, (b) a training process of updating a weight of the connection, and (c) an activation function generating an output value from a weighted sum of inputs received from a previous layer.

The ANN may include network models such as a deep neural network (DNN), a recurrent neural network (RNN), a bidirectional recurrent deep neural network (BRDNN), a multilayer perceptron (MLP), and a convolutional neural network (CNN), but is not limited thereto. In the present specification, the term "layer" may be used interchangeably with the term "hierarchy."

The ANN is classified into single-layer neural networks and multi-layer neural networks according to the number of hierarchies. A general single-layer neural network includes an input layer and an output layer. In addition, a general multi-layer neural network includes an input layer, one or more hidden layers, and an output layer.

The input layer is a layer that receives external data, and the number of neurons in the input layer is the same as the number of input variables, and the hidden layer is located between the input layer and the output layer, receives a signal from the input layer, extracts a feature, and transfers the feature to the output layer. The output layer receives a signal from the hidden layer and outputs an output value based on the received signal. An input signal between neurons is multiplied by each connection strength (weight) and then summed, and when the sum is greater than a threshold of a neuron, the neuron is activated and outputs an output value obtained through an activation function.

Meanwhile, the DNN including a plurality of hidden layers between an input layer and an output layer may be a representative ANN implementing deep learning, which is a type of machine learning technology. Meanwhile, the term "deep learning" may be used interchangeably with the term "deep-layer learning."

A workflow of machine learning includes a series of processes of collecting data for training and validation, modeling, and then training a model, and may include processes of collecting training data, inspecting and exploring data, preprocessing and cleaning data, and modeling and training.

### 1. Collecting Training Data

Training data applied to training of a learning model of the present specification may be generated using data collected from numerous samples. The training data may include various digital music protocol data files (e.g., MIDI files) for generating symbolic music. For example, an MIDI file is a digital sound file created using a computer, and music composed in MIDI format is easily edited or synthesized by using a computer.

In the present specification, at least one different types of training data sets may be used to train the learning model, and each training data may further include one or more experiment-based results used as function labels. At least some of the training data sets may be used to train the learning model, and some others may be used to validate the trained learning model.

### 2. Inspecting and Exploring Data

Once the training data for training the learning model is collected, the collected training data may undergo inspection and exploration regarding a data structure, noise data, and a data cleaning method for applying machine learning.

Such a stage of inspecting and exploring data is referred to as an exploratory data analysis (EDA) stage, and the EDA may be described as a process of observing and understanding the collected data from various perspectives. Before training the data, independent variables, dependent variables, types of variables, data types of variables, and the like may be inspected through visualization such as graphs, statistical tests, and the like, and features of the data and inherent structural relationships can be confirmed in advance. Through such an EDA, by examining a distribution and values of data, phenomena represented by the data may be better understood, and potential problems in the data may be discovered. In addition, through a process of inspecting data from various perspectives, various patterns that may not have been identified at a problem definition stage may be discovered, and, based on this, existing hypotheses may be modified or new hypotheses may be established. EDA may broadly include a process of exploring abnormal values in the data and a process of analyzing relationships among data attributes.

The process of exploring abnormal values is to check whether outliers exist in the data, and may include a sampling method, a statistical method, and a visualization method. The sampling method extracts a random sample from data to check an overall trend and peculiarities of data values. The statistical method may use summary statistics such as a mean, a median, and a mode for checking a center of data, or a range and a variance for checking a dispersion of data. The visualization method may determine which statistical indicators are appropriate for individual attributes of the collected data by utilizing a probability density function, a histogram, a dotplot, a word cloud, a time series chart, a map, and the like. However, when using statistics, it should be noted that since the mean reflects all data values in a set, when there are outliers, its value may be affected by the outliers, whereas since the median uses only one value located in the middle, a representative result may be obtained despite the presence of the outliers.

The process of analyzing relationships among data attributes refers to finding combinations of attributes having meaningful correlations with each other in the data, and the relationship analysis may be differently performed according to combinations of attributes between categorical variables (qualitative) that cannot be numerically expressed but can be arbitrarily quantified and numeric variables (quantitative) that can be quantified. A categorical-categorical relationship may indicate the number of values corresponding to a pair of each of attribute values using a cross table or a mosaic plot, a numeric-categorical relationship may observe statistical values (mean, median, etc.) for each category or may be visually represented through a box plot, and a numeric-numeric relationship may analyze a correlation between two attributes through a correlation coefficient. It may be confirmed that a correlation coefficient of -1 indicates a negative correlation in which two attributes vary in opposite directions, 0 indicates no correlation, and 1 indicates a positive correlation in which two attributes always vary in the same direction. A relationship between two attributes having the correlation coefficient may also exhibit various patterns, and may be visually represented using a scatter plot.

### 3. Preprocessing and Cleaning Data

Once inspection and exploration are completed, data preprocessing is performed to process the data into a form suitable for a model for machine learning training. The data preprocessing is to clean the data and convert the data into a form understandable by a model, and the data preprocessing may generally include handling missing data, outlier removal, scaling, categorical data encoding, feature selection and extraction, and data transformation. Detailed processes of the data preprocessing may be selectively performed in whole or in part, and a separate machine learning model may also be used for the data preprocessing.

The handling missing data is to process missing data when the missing data exists in data, and the missing data may be represented as NaN (Not a Number) or an empty value or deleted. As the missing data in the data is filled or deleted, completeness of the data may be improved, and when the missing data is filled, a mean value, a median value, a mode, and the like may be used.

The outlier removal is to remove outliers, which are values deviating from a general data pattern, from the data. The outliers may degrade performance of a model and therefore should be removed or replaced, and the outliers may be identified and the corresponding rows or columns may be deleted or replaced with other values.

The data scaling is a process of adjusting the size of data, and through the data scaling, the range of data may be adjusted such that the performance of a model is improved or the convergence speed is enhanced. Through the data scaling, characteristics of data may be aligned to similar ranges, and in general, standardization and normalization may be applied in the data scaling. The standardization is a method of transforming data into a distribution having a mean of 0 and a standard deviation of 1, and mainly transforms by using a mean and a standard deviation, and a standardized value z may be expressed as *z*=(*x*-µ)/σ (where x denotes an original value, µ denotes the mean, and σ denotes the standard deviation). The normalization is a method of transforming the range of data into [0,1] or [-1,1], and mainly transforms the data by using a minimum value and a maximum value, and a normalized value xₙₒᵣₘ may be expressed as *xₙₒᵣₘ=*(*x*-*x* ₘᵢₙ)/(*x* ₘₐₓ -*x* ₘᵢₙ) (where x denotes an original value, xₘᵢₙ denotes the minimum value, and xₘₐₓ denotes the maximum value).

The categorical data encoding is to convert categorical variables expressed as strings or integer values that cannot be directly input to a model into numeric types that can be input to the model. In general, the categorical variables may be converted into numeric values using one-hot encoding or label encoding.

The feature selection and extraction is to select the most useful features for training a model or to extract new features to improve performance of the model, and through such a process, complexity of the model may be reduced and overfitting may be prevented.

The data transformation is to transform data to extract new information or to allow the model to better understand the data, and may include tokenization of text data or preprocessing of image data. Through the data transformation, useful features may be extracted from original data or data may be converted into an appropriate form, thereby improving performance of the model.

Through the data preprocessing as described above, an effect of improving performance and ensuring stability of a machine learning model may be achieved.

Meanwhile, when training the learning model based on training data including music information according to one embodiment of the present invention, a process of preprocessing information expressed in natural language and a process of training a language model based on the preprocessed data may be performed.

### 3-1. Text Preprocessing for Large Language Models

When data collected for analyzing a structure of music and digital music protocol data are not preprocessed as required, tokenization, cleaning, and normalization may be performed on the data according to an intended use.

The tokenization refers to dividing given data into a unit called a token, and the unit of the token may generally be defined as a meaningful unit. The tokenization may broadly include word tokenization and sentence tokenization.

The word tokenization refers to a case in which the basis for the token is a word, and here, the word may include not only a word unit but also a phrase or a string having meaning. The word tokenization refers to separating words based on a blank or punctuation, for example, symbols such as a period, a comma, a question mark, a semicolon, and an exclamation mark. However, since removing all punctuation or special characters during the tokenization may cause the token to lose the meaning, a precise algorithm for the tokenization may be required. For example, in cases in which the punctuation is included in a word itself or a special character having meaning is used, simply removing them may not solve the problem. Therefore, during the tokenization, tokenization rules such as Penn Treebank Tokenization rule may be applied.

The sentence tokenization refers to a case of dividing text into sentence units, and when data is in an uncleaned state, the data may be usually not divided into sentence units, so the sentence tokenization may be required in accordance with an intended use. Such sentence tokenization may be defined by various rules according to a language used and how special characters are used in the corresponding corpus.

A task of classifying the tokens in accordance with the intended use is referred to as tokenization, and before or after the tokenization, the cleaning and the normalization may be performed on text data in accordance with the intended use. The cleaning refers to removing noise data, and the normalization refers to unifying words having different representation methods so as to convert the words into the same words.

The task of the cleaning may be performed prior to the task of the tokenization in order to exclude elements that interfere with the task of the tokenization and to perform the task of the tokenization, but may also be repeatedly performed after the task of the tokenization to remove noise still remaining. The noise data removed in the task of the cleaning are characters having no meaning, and methods of removing unnecessary words may include a method of removing stopwords, a method of removing words having low frequency of occurrence and words having short length, and the like.

The task of the normalization, based on rules, includes unification of words having different notations, unification uppercase and lowercase letters, and the like, and the unification of the uppercase and lowercase letters is a normalization method that may reduce the number of words in English-speaking languages, and since the uppercase letters in English-speaking languages are used only in specific situations such as at the beginning of a sentence and most texts are written in the lowercase letters, the unification of the uppercase and lowercase letters may mostly be performed as a lowercase conversion task of converting the uppercase letters into the lowercase letters.

In order to process natural language in a computing system, a task of preprocessing of digitizing text is required, and for this, a task of mapping each word of the text to a unique integer is performed. Such a mapping process may utilize techniques such as integer encoding, padding, and one-hot encoding.

The integer encoding is one method of assigning integers to words, and in which a vocabulary is generated by arranging words in order of frequency and integers are sequentially assigned from smaller numbers to the words in order of higher frequency. The integer encoding performs the sentence tokenization from text data including multiple sentences, and performs the word tokenization in parallel with the cleaning and normalization tasks. In this case, the words are converted into lowercase letters so that the number of words is unified, and deletion of words may be performed based on stopwords and word lengths. Through this, the word may be recorded as a key, and the frequency of each word may be recorded as a value. After being arranged in order of higher frequency in the text, integers are assigned to words having higher frequencies, thereby performing the integer encoding.

The padding is a task of arbitrarily matching lengths of sentences having different lengths in the text to the same length. A computing system may group sentences having the same length as single matrix to enable parallel computation. That is, in order to perform the parallel computation in the computing system, "0" may be arbitrarily filled in results of the integer encoding of the sentences having different lengths in the text to equalize the lengths of the sentences. That is, after the longest sentence is found from a vocabulary in which integer encoding is completed, and "0" may be added to an integer matrix to correspond to a length of the longest sentence. The computing system may recognize sentences having the same length as one matrix and perform parallel processing, and in this case, the computing system may ignore "0" words recognized as meaningless words. As such, filling a specific value in data to adjust a size (shape) of the data is referred to as padding, and when the number "0" is used for length adjustment, it is referred to as zero padding.

The one-hot encoding is a vector representation method of words, in which a size of a vocabulary corresponds to a dimension of a vector, a value of 1 is assigned to indices of words to be represented, and a value of 0 is assigned to other indices, and a vector represented in this way is referred to as a one-hot vector. The one-hot encoding includes the integer encoding and an index assigning process. After the integer encoding is performed to assign a unique integer to each word, unique integers of the words to be represented is regarded as the indices, and "1" is assigned to the corresponding positions, and "0" is assigned to positions of indices of other words. However, the one-hot encoding has disadvantages in that, as the number of words increases, the space required to store vectors increases (increase of dimensions of vectors) and similarity among words cannot be identified. In order to address such disadvantages, techniques of vectorizing words in a multidimensional space by reflecting latent meanings of words have been proposed, such as Latent Semantic Analysis (LSA) which is a count-based vectorization method, NNLM, RNNLM, Word2Vec, and FastText which are prediction-based vectorization methods, and a GloVe method which uses both the count-based method and the prediction-based methods.

Meanwhile, in order for a computer to understand and process the text, the text needs to be appropriately converted into numbers. Since the performance of natural language processing varies greatly depending on the method of representing words, many techniques to digitize words have been proposed. At present, a word embedding method of vectorizing each word through training of an ANN is most widely used.

The word embedding is a method of representing a word as a vector and converting the word into a dense representation. A result derived through a process of the word embedding is referred to as a dense vector or an embedding vector. Word embedding methodologies include LSA, Word2Vec, FastText, GloVe, and the like.

### 4. Modeling and Training

The ANN may be trained using training data. Here, training may refer to a process of determining parameters of the ANN using learning data in order to achieve purposes such as classifying input data, performing regression, or clustering. Representative examples of parameters of the ANN may include a weight assigned to a synapse or a bias applied to a neuron.

The ANN trained by training data may classify or cluster input data according to patterns of the input data. Meanwhile, in the present specification, the ANN trained using the training data may be referred to as a trained model.

Learning methods of the ANN will be described as follows. The learning methods of the ANN may broadly be classified into supervised learning, unsupervised learning, semi-supervised learning, and reinforcement learning.

The supervised learning is a method of machine learning for inferring a function from the training data. And, among the functions inferred in this manner, outputting continuous values may be referred to as regression, and outputting by predicting a class of an input vector may be referred to as classification.

In the supervised learning, the ANN is trained in a state in which labels for the training data are given. Here, the label may refer to ground truth (or a result value) that the ANN needs to infer when the training data are input into the ANN. In the present specification, the ground truth (or the result value) that the ANN needs to infer when the training data are input is referred to as a label or labeling data. In addition, in the present specification, setting the label in the training data for training the ANN is referred to as labeling the training data with labeling data. In this case, the training data and the label corresponding to the training data constitute one training set, and may be input to the ANN in the form of the training set.

Meanwhile, the training data represents a plurality of features, and the labeling of the training data with the label may mean that the label is attached to the features represented by the training data. In this case, the training data may represent features of an input object in the form of a vector. The ANN may infer a function regarding an association between the training data and the labeling data using the training data and the labeling data. And, the parameters of the ANN may be determined (optimized) through an evaluation of the function inferred by the ANN.

The unsupervised learning is a type of machine learning, in which no label is given to the training data. Specifically, the unsupervised learning may be a learning method of training the ANN to classify by finding patterns in the training data itself, rather than an association between the training data and the label corresponding to the training data. Examples of the unsupervised learning may include clustering or independent component analysis (ICA). In the present specification, the term "grouping" may be used interchangeably with the term "clustering."

Examples of the ANNs using the unsupervised learning may include a generative adversarial network (GAN) and an autoencoder (AE).

The GAN is a machine learning method in which two different AIs, a generator and a discriminator, compete with each other to improve performance. In this case, the generator is a model that creates new data and may generate new data based on original data. In addition, the discriminator is a model that recognizes patterns of data and may perform a role of discriminating whether input data is the original data or the new data generated by the generator. And, the generator may learn by receiving data that has failed to deceive the discriminator, and the discriminator may learn by receiving data deceived by the generator. Accordingly, the generator may evolve to deceive the discriminator as well as possible, and the discriminator may evolve to better distinguish between the original data and the data generated by the generator.

The AE is a neural network that aims to reproduce an input itself as an output. The AE includes an input layer, at least one hidden layer, and an output layer. In this case, since the number of nodes of the hidden layer is smaller than the number of nodes of the input layer, a dimension of data may decrease, and accordingly, compression or encoding is performed. In addition, data output from the hidden layer is input into the output layer. In this case, since the number of nodes of the output layer is greater than the number of nodes of the hidden layer, a dimension of data may increase, and accordingly, decompression or decoding is performed.

Meanwhile, the AE adjusts connection strengths of neurons through training to represent input data as hidden layer data. In the hidden layer, information is represented with fewer neurons than in the input layer, and the fact that the input data can be reproduced as the output may mean that the hidden layer has discovered and represented hidden patterns from the input data.

The semi-supervised learning is a type of machine learning, and may refer to a learning method in which both the training data with the label and the training data without the label are used. As one technique of the semi-supervised learning, there is a technique of inferring the label of the training data without the label and then performing training using the inferred label, and such a technique may be usefully used in a case in which a cost for labeling is high.

The reinforcement learning is a theory that, when an environment in which an agent can determine what action to take at each moment is given, the agent can find the best path through experience without data. The reinforcement learning may mainly be performed by a Markov Decision Process (MDP). The MDP may be explained as follows: first, an environment in which information necessary for the agent to take a next action is composed of is given; second, how the agent will act in the environment is defined; what the agent does well is defined to provide a reward and what the agent does poorly is defined to provide a penalty; and fourth, by repeatedly experiencing until a future reward reach a maximum, an optimal policy is derived.

The ANN may be specified in its structure by a configuration of the model, an activation function, a loss function or a cost function, a learning algorithm, and an optimization algorithm, and the like, and hyperparameters may be preset before training, and thereafter, model parameters may be set through training so that contents thereof may be specified.

For example, factors that determine the structure of the ANN may include the number of hidden layers, the number of hidden nodes included in each hidden layer, an input feature vector, and a target feature vector.

The hyperparameters include various parameters that need to be initially set for training, such as initial values of the model parameters. And, the model parameters include various parameters to be determined through training. For example, the hyperparameters may include initial values of weights between nodes, initial values of biases between nodes, a mini-batch size, the number of training iterations, a learning rate, and the like. And, model parameters may include weights between nodes, biases between nodes, and the like.

The loss function may be used as an indicator (criterion) for determining optimal model parameters in a training process of the ANN. In the ANN, training refers to a process of manipulating the model parameters to reduce the loss function, and a purpose of training may be regarded as determining the model parameters that minimize the loss function. The loss function may mainly use mean squared error (MSE) or cross entropy error (CEE), but the present invention is not limited thereto. The CEE may be used in a case in which ground truth labels are one-hot encoded. One-hot encoding is an encoding method in which only the neuron corresponding to ground truth is set to a ground truth label value of 1, and a neuron not corresponding to the ground truth is set to a ground truth label value of 0.

In machine learning or deep learning, learning optimization algorithms may be used to minimize the loss function, and the learning optimization algorithms include gradient descent (GD), stochastic gradient descent (SGD), momentum, Nesterov accelerated gradient (NAG), Adagrad, AdaDelta, RMSProp, Adam, Nadam, and the like.

The GD is a technique of adjusting the model parameters in a direction to reduce the value of the loss function in consideration of a gradient of the loss function in a current state. A direction of adjusting the model parameters is referred to as a step direction, and a magnitude of adjustment is referred to as a step size. In this case, the step size may refer to a learning rate. The GD obtains a gradient by partially differentiating the loss function with respect to each model parameter, and may update the model parameters by changing the model parameters in a direction of the obtained gradient by the learning rate.

The SGD is a technique of dividing learning data into mini-batches and performing the GD for each mini-batch to increase the frequency of performing the gradient descent.

The Adagrad, AdaDelta, and RMSProp are techniques of increasing optimization accuracy by adjusting the step size in the SGD. The momentum and NAG in SGD are techniques of increasing optimization accuracy by adjusting the step direction. The Adam is a technique of increasing optimization accuracy by adjusting the step size and the step direction through combining the momentum and the RMSProp. The Nadam is a technique of increasing optimization accuracy by adjusting the step size and the step direction through combining the NAG and the RMSProp.

A learning speed and accuracy of the ANN is largely influenced not only by the structure of the ANN and a type of the learning optimization algorithm, but also by the hyperparameters. Therefore, in order to obtain a good learning model, it is important not only to determine an appropriate structure of the ANN and a learning algorithm but also to set appropriate hyperparameters.

Generally, the hyperparameters are experimentally set to various values to try to train the ANN, and are set to an optimal value that provide a stable learning speed and accuracy according to learning result.

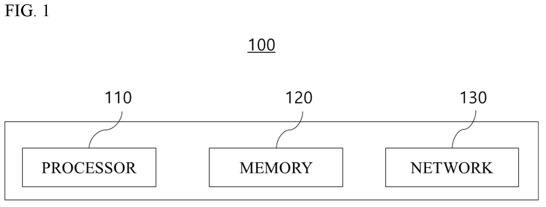

FIG. 1 is a schematic diagram of an electronic device according to one embodiment of the present invention.

As shown in FIG. 1, an electronic device (hereinafter referred to as "electronic device") 100 according to an embodiment of the present invention may include at least one processor 110, at least one memory 120, and at least one communication unit 130. The electronic device 100 is a basic configuration for performing a computing environment, and in another embodiment, the electronic device 100 may be implemented to additionally or alternatively include some other components, may be implemented as a single entity or a plurality of entities, or may be implemented with only some of the disclosed components. Components inside or outside the electronic device 100 or at least some of the components may transmit or receive data or signals by being connected to each other through a bus, a general purpose input/output (GPIO), a serial peripheral interface (SPI), or a mobile industry processor interface (MIPI).

The processor 110 may mean a set of one or more processors unless explicitly expressed otherwise in context, and may drive software (e.g., instructions, programs, etc.) stored in at least the memory 120 configured to control the processor 110 and the components of the electronic device 100. In addition, the processor 110 may perform various operations such as computation, processing, data generation, or processing, and may read data or the like from the memory 120 or store the data or the like into the memory 120. The processor 110 may include at least one core and a processor for data analysis, machine learning, or deep learning, such as a central processing unit (CPU), a general purpose graphics processing unit (GPGPU), and a tensor processing unit (TPU). The processor 110 may read software stored in the memory 120 to perform data processing for machine learning (or deep learning) of the present invention. According to one embodiment of the present disclosure, the processor 110 may perform computations for training a neural network. The processor 110 may perform calculations for training a neural network such as processing input data for training in deep learning, extracting features from the input data, calculating errors, updating weights of the neural network using backpropagation. At least one of the CPU, GPGPU, and TPU of the processor 110 may process training of a neural network model. For example, the CPU and the GPGPU may together process training of the neural network model and data classification using the neural network model. In addition, in one embodiment of the present disclosure, at least one processor 110 of the electronic device 100 may be used together to process training of the neural network model and data classification using the neural network model.

The memory 120 is configured to store various data, and the data may be data obtained, processed, or used by at least one component of the electronic device 100 and may include software (e.g., an instruction, a program, etc.). The memory 120 may mean a set of one or more memories unless explicitly expressed otherwise in context, and may include a storage medium of at least one type among a flash memory type, a hard disk type, a multimedia card micro type, a card-type memory (e.g., an SD or XD memory), a RAM, a static random access memory (SRAM), a read-only memory (ROM), an electrically erasable programmable read-only memory (EEPROM), a programmable read-only memory (PROM), a magnetic memory, a magnetic disk, an optical disk, and a web storage that performs a storage function on the Internet. The instruction, the program, or the software stored in the memory 120 may be used to refer to an operating system for controlling the components of the electronic device 100, an application, or middleware that provides various functions to the application so that the application can utilize the components of the electronic device 100. In one embodiment, when the processor 110 performs a specific computation, the memory 120 may store the instructions that are performed by the processor 110 and correspond to the specific computation.

The communication unit 130 may perform wireless or wired communication between the electronic device 100 and another device (e.g., a user terminal or another server), and the communication unit 130 may use wireless communication systems according to methods such as eMBB, URLLC, mMTC, LTE, LTE-A, NR, UMTS, GSM, CDMA, WCDMA, TDMA, FDMA, OFDMA, SC-FDMA, WiBro, WiFi, Bluetooth, NFC, GPS, or GNSS. In addition, the communication unit 130 can use various wired communication systems such as a USB, an HDMI, a recommended standard-232 (RS-232), a plain old telephone service (POTS), a public switched telephone network (PSTN), an x digital subscriber line (xDSL), a rate adaptive DSL (RADSL), a multi rate DSL (MDSL), a very high speed DSL (VDSL), a universal asymmetric DSL (UADSL), a high bit rate DSL (HDSL), and a local area network (LAN). In one embodiment of the present invention, the communication unit 130 may be configured regardless of a communication mode such as wired or wireless, and may be configured with various networks such as a personal area network (PAN) or a wide area network (WAN). In addition, the network may be a known world wide web (WWW), and may also use a wireless transmission technology used for short-range communication such as an infrared data association (IrDA) or Bluetooth. The technologies described in one embodiment of the present invention may also be used in other networks described above.

The electronic device 100 according to one embodiment of the present invention may configure a symbolic music generation system 100 using a large language model, or may execute software that configures a symbolic music generation method using a large language model.

The symbolic music generation system 100 according to an embodiment of the present invention may improve disadvantages that conventional known music generation technologies have. Conventional music generation technologies require domain-specific annotations such as bars and beats that are missing from raw digital music protocol data for tokenization of digital music protocol data (e.g., MIDI data). In addition, conventional token embedding methods have shown little effect without the domain-specific annotations. One embodiment of the present invention proposes a music generation framework based on the digital music protocol data to improve these limitations or disadvantages.

The music generation framework according to one embodiment of the present invention may effectively encode a musical structure by using two types of structural embeddings without the domain-specific annotations of the digital music protocol data. The music generation framework of the present invention may generate practical and reproducible music by utilizing a large language model.

The symbolic music generation method according to an embodiment of the present invention may include a technology of creating new music through algorithms and computer programs by representing music in the form of symbols or codes. By using such a symbolic music generation method, a pattern and a structure of music may be analyzed, and new music may be generated based on the analysis. The symbolic music generation method may include processes of music data representation, algorithms, model selection and training, and music generation. In symbolic music generation, in a digital music protocol file, music may be represented as symbols for an onset and an offset of each note, pitch, velocity, and the like.

Various algorithms or machine learning models may be used for the symbolic music generation, and for example, Music Transformer, which is a deep learning model applying a Transformer model used in natural language processing to music generation, may be used. The Music Transformer model may generate music of a consistent style by learning structural patterns of music. The Music Transformer model may understand patterns and rules of music by training a large amount of music data using a selected algorithm. New music can be generated by using such a trained model. Through this process, creative and new music may be created by using symbolic music generation technology.

Such symbolic music generation technology is rapidly growing in the field of machine learning, and the number of music datasets for training large-scale music generation models is steadily increasing. In general, according to sequential characteristics of music, a Transformer architecture may be applied. The Transformer architecture is frequently used in natural language processing (NLP) and requires vertical (simultaneous performance of multiple notes) and temporal (performance of all notes for a specific duration) structures of music data, which demand a tokenization procedure different from general positional encoding used in text generation.

**[Table 1]**

| Method | Token Types |
|---|---|
| REMI | Note-On, Duration, Tempo, Position, Bar, Chord |
| CP | Track, Tempo, Position, Bar, Chord, Pitch, Duration, Velocity, Family |
| MIDI-like | Note-On, Note-Off, Time-Shift, Velocity |
| MuseNet | Pitch-Volume-Instrument, Wait(Time-Shift) |

[Table 1] Examples of conventional methods for tokenizing the digital music protocol (MIDI) data

Among conventional disclosed tokenization methods for the digital music protocol data (MIDI data), REMI (Pop Music Transformer: Beat-based Modeling and Generation of Expressive Pop Piano Compositions, Yu-Siang Huang, 2020) or CP (compound word representation, Compound word transformer: Learning to compose full-song music over dynamic directed hypergraphs, Wen-Yi Hsiao, 2021) perform tokenization based on annotations generated in the MIDI data by an operator. MIDI-like tokenization (MUSIC TRANSFORMER: GENERATING MUSIC WITH LONG-TERM STRUCTURE, Cheng-Zhi Anna Huang, 2018) is known to have the highest compatibility with large-scale music data on cloud-based platforms. However, such known MIDI data tokenization basically requires temporal divisions of bars or annotations for chords of the MIDI data. Generating the annotations in the MIDI data is mostly performed manually by an operator, and such a process has a disadvantage in that a large amount of time and cost are required.

Another approach is to use a heuristic algorithm for the digital music protocol data (e.g., MIDI data). However, such a method can be stably applied only when input music proceeds at a constant speed or tempo and represents well-divided bars and beats. However, for most MIDI data directly transcribed from live music audio, a case in which notes deviating from a scripted tempo are added frequently occurs when being played by a performer. That is, the heuristic algorithm is difficult to apply to the digital music protocol data (e.g., MIDI data) of live music audio.

MuseNet has been proposed as a method for vanilla MIDI tokenization to effectively encode the musical structure without the domain-specific annotations of the digital music protocol data (e.g., MIDI data). MuseNet shows high performance in prompt-based music generation by introducing additional structural embeddings to better derive the structural context of music from MIDI-based tokens. MuseNet is a DNN for music composition released by OpenAI in 2019, which has a structure of predicting a next key of an input key by being trained based on the digital music protocol data.

The symbolic music generation system 100 according to one embodiment of the present invention may encode a musical structure based on raw digital music protocol data (MIDI data), based on the structural embedding proposed in MuseNet. Specifically, one embodiment may construct the structural embedding considering noise of the raw digital music protocol data (e.g., MIDI data) by training a vanilla GPT-2 model that implements the structural embedding of MuseNet.

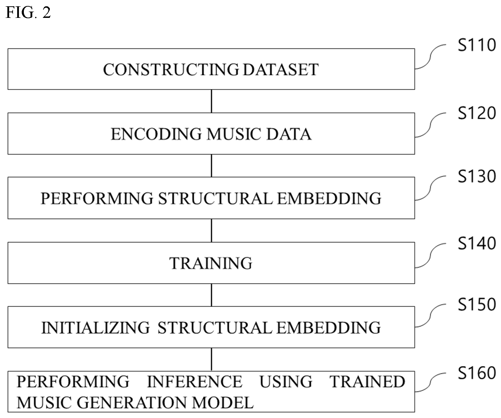

As shown in FIG. 2, a symbolic music generation method using a language model implemented in the symbolic music generation system 100 using the language model according to one embodiment of the present invention may include: constructing a dataset (S110); encoding music data (S120); performing a structural embedding (S130); training a music generation model (S140); initializing at least one of the structural embeddings during training (S150); and performing inference using the trained music generation model (S160).

### Constructing a dataset (S110)

The dataset for model training of the symbolic music generation system 100 according to one embodiment of the present invention may include the Pop1k7 and GiantMIDi-Piano datasets, which are composed of digital music protocol data files (e.g., MIDI files) transcribed from source audio recordings collected from music streaming services (e.g., YouTube). A training set for model training may include 1,748 pieces from Pop1k7 and 5,842 pieces from GiantMIDI-Piano after pruning music longer than ten minutes from GiantMIDI-Piano. In addition, two types of data augmentation may be applied to the training set, wherein the data augmentation includes: first, pitch transposition to one of {-3, -2, -1, 0, 1, 2, 3} half steps; and second, time stretching in which the overall tempo is scaled to one of {0.95, 0.975, 1.1, 1.025, 1.05}. As a result, the training set may include a total of 17,383 hours of transcribed digital music protocol data (e.g., MIDI data). A test dataset for testing the model may include all pieces of the MAESTRO dataset composed of 1,276 live MIDI piano performances played by master pianists. The dataset of the present embodiment is configured as described above, but is not limited thereto, and the configuration of the dataset may be freely modified by those skilled in the art.

### Encoding music data (S120)

The symbolic music generation system 100 according to one embodiment may encode music data configured to generate input tokens from input digital music protocol data. In this case, an event-based tokenization method of MuseNet, which is a music generation model, may be applied to encode the music data into a token sequence. In the tokenization method, all meta information in the digital music protocol data is deleted, and only different input tokens are used. The input tokens may include 4,096 note-on tokens composed of 32 different velocities and 128 pitch (note height) numbers (e.g., <v64:C4>), 128 note-off tokens having a velocity of 0 (e.g., <v0:C4>), and 100 time-shift tokens (e.g., <wait:2>). In addition, special tokens such as <BOS> (beginning of sequence), <EOS> (end of sequence), and <PAD> (pad token; a token for matching a length of a short sentence to a long sentence) may also be used to arrange pieces having various durations (note length) into a fixed sequence length.

### Performing a structural embedding (S130)

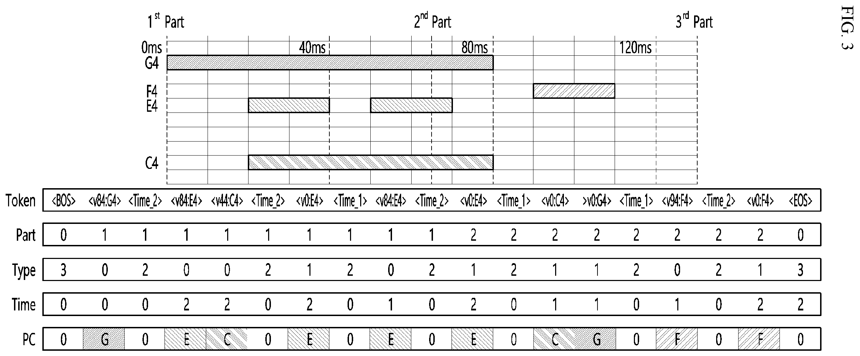

As shown in FIG. 3, the symbolic music generation system 100 according to one embodiment of the present invention may perform one or more structural embeddings from the input tokens. For example, the symbolic music generation system 100 may configure four structural embedding layers for the digital music protocol data based on the structural embedding of MuseNet, which is a music generation model. As shown in FIG. 3, the four structural embedding layers may output structural embedding results, and the structural embeddings may be concatenated with token embeddings, projected, and then added to positional embeddings. The structural embedding may be pre-trained, output, and stored by a first model such as MuseNet. Alternatively, the structural embedding may be output based on the input tokens by adding an embedding layer to a front end of the symbolic music generation model according to the present embodiment. The structural embeddings may include a part embedding, a type embedding, a time embedding, and a PC embedding, and a class index for each embedding may be configured as follows.

Part embedding indicates which time part of an entire music (song) each token of the digital music protocol data is located in, and each token of the music may be assigned to one of 128 equally divided parts with respect to actual time encoded through the time-shift token (time-movement token). As a result, each token may be indexed from 0 to 128, where 0 represents a token other than a note, for example, <BOS> or <EOS>, and 1 represents an actual beginning part of the music (song). That is, the part embedding equally divides the total time length of the music into 128, calculates a cumulative time of each token using a time token within a sequence in an event token sequence, and determines a part class of each token according to the cumulative time of the token.

The type embedding may indicate a type of each token. A type class for each token may be determined according to whether the token is associated with an event of the note-on token (0), the note-off token (1), the time-shift token (2), or the special token (3). Through such a type embedding, the model may more easily distinguish various token types and learn dependencies among tokens within each token type. Without the type embedding, all tokens may be learned independently of each other, regardless of their unique types.

The time embedding indicates how much relative time has elapsed in each token, and the relative time indicates how much time, in units of 10ms, has elapsed in each non-time-shift token since the most recent time-shift token (time-movement token). The time embedding may be directly assigned to the note-on token or the note-off token following each time-shift token, thereby more directly encoding a temporal progression. The time embedding of 0 may be assigned to all time-shift tokens, and when a time token appears in the sequence, a corresponding time-shift value (i.e., when it is <time-2>, the time-shift value is 2) may be designated as a time class for a next non-time token. In the present embodiment, since a maximum length of each music (song) may vary in a dataset, relative time rather than absolute time may be used.

The PC embedding indicates a PC of each note-on token or note-off token. The PC refers to a set of all notes having the same note name, meaning a collection of specific pitches having the same note name existing in all octaves. Since each note-on token or note-off token includes not only a pitch number of the digital music protocol data but also a velocity of the digital music protocol data, a PC of each token may be assigned as a PC class of the PC embedding, and 0 may be assigned to other tokens. While MuseNet originally uses only a relative position of each note within a corresponding chord, and its interpretation for a chord, which is a group of notes, is unclear, a tone of each token may be clearly expressed by utilizing the PC of each note-related token. That is, when the model integrates the PC embedding, a harmonic context of an input may be analyzed by directly accumulating tone information through self-attention.

### Training (S140)

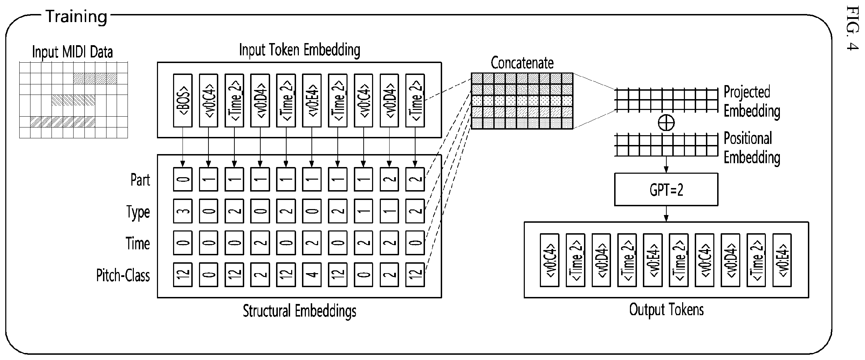

As shown in FIG. 4, the symbolic music generation system 100 according to one embodiment of the present invention may train (learn) a symbolic music generation model by using MuseNet, which is a music generation module, as a first model and GPT-2, which is a large language model, as a second model, as a backbone architecture. During training of the symbolic music generation model, the four types of structural embeddings described above may be concatenated to the input token embedding along a feature axis, and a resulting embedding may be projected into a hidden embedding dimension through a fully connected layer. Before the embeddings are provided as inputs to GPT-2, a trainable sequence positional encoding, which is randomly initialized as in vanilla GPT-2, may be added. Information on a position of a token may be injected into the language model through the positional encoding. During training of the symbolic music generation model, after the four types of structural embeddings are concatenated with the input tokens, the concatenated embeddings may be projected into an input embedding size for prediction of a next token. The symbolic music generation model may perform a task of predicting the next token for training, similar to language modeling.

In this embodiment, the symbolic music generation system 100 according to one embodiment of the present invention may use AdamW having a learning rate of 1e-4, which is linearly decayed to 0 after 1,000 warm-up steps, for training of the model. A maximum sequence length of 1,024 may be used, and a total of 144,786 training iterations or 6 epochs may be executed. Training is performed using the GPT-2 architecture as a base optimizer, and in this case, the maximum length of a token may be set to 1,024. All test samples may be inferred with MuseNet from a token prompt, and a short token sequence at the beginning part of music in each music (song) of MAESTRO may be used as the prompt. When X = [x₁, ..., x_{N}] is a sequence of the input tokens, where N is a length of the sequence, at each step, the model learns how to predict xᵢ from x_{<i} by optimizing L = -∑logp(xₙ | x_{<i}).

### Initializing the structural embedding (S150)

In order to verify the effect of the structural embeddings of the symbolic music generation model, the symbolic music generation system 100 according to one embodiment may initialize at least some of the four types of structural embeddings. The initialization of the structural embeddings may include a method (a first initialization method) of randomly initializing all of the four types of structural embeddings (truncated normal initialization), and a method (a second initialization method) of initializing the part embedding and the time embedding by using sinusoidal weights and initializing the type embedding and the PC embedding by using the first initialization method.

The first initialization method may be a method of initializing values of initial embeddings to random values or in a form of a specific distribution, and may initialize the embeddings in a form of a probability distribution in which values smaller than a minimum value or larger than a maximum value are removed from a normal distribution.

The second initialization method may be a method of applying sinusoidal weights to time-related embeddings (part, time) and applying the truncated normal initialization to other embeddings (type, PC), and this initialization method is conceived from preserving continuity of sequential musical properties such as notes and pitches by using sinusoidal encoding. A sinusoidal lookup table may be applied to the time-related embeddings (part and time).$\begin{matrix}{SE}_{\left(k,2i\right)} = sin \left(k/{\left(10000/w\right)}^{2 i / d}\right) \\ {SE}_{\left(k,2i+1\right)} = cos \left(k/{\left(10000/w\right)}^{2 i / d}\right)\end{matrix}$

Here, k denotes a class index of the part embedding or the time embedding, i denotes a feature index, d denotes a hidden size, and w denotes a scaling coefficient. When two different values are used for w, the corresponding embeddings become orthogonal, thereby allowing the properties of the part embedding and the time embedding to be represented without interference. Considering that the part embedding is composed of much larger units than the time embedding, which corresponds to 10ms, the part embedding and the time embedding may heuristically be set to w = 10 and w = 1, respectively.

A symbolic music generation model equipped with structural embeddings randomly initialized according to the first initialization method is referred to as GPT2-RE, and a model equipped with structural embeddings initialized according to the second initialization method is referred to as GPT2-SE, such that their performances may be compared with that of GPT2, which is a vanilla language model not equipped with structural embeddings.

### Performing inference using the trained music generation model (S160)

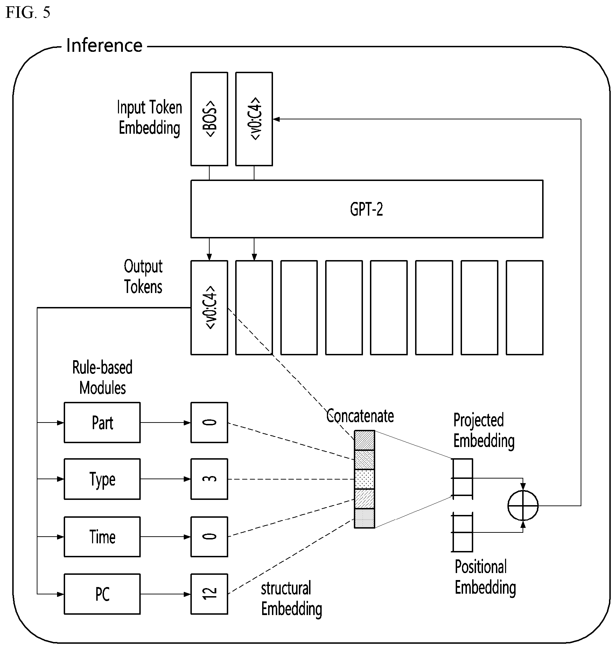

As shown in FIG. 5, the symbolic music generation system 100 according to one embodiment may infer a next token for an input token by using a symbolic music generation model trained by applying the four types of structural embeddings. During inference, when a token prompt of digital music protocol data is given, the symbolic music generation model may generate a sequence in an autoregressive generation manner. During the inference, whenever a token is generated as an output for the input token, feature values may be generated every time by a rule-based algorithm to perform additional embedding and may be used when generating a token of a next time step. That is, after the token is generated, the four types of structural embeddings (part, type, time, and PC) of the corresponding token may be inferred in all subsequent tokens by a rule-based module and provided to the model for a generation step for an output of the next token. In the present embodiment, sampling may be performed five times to reduce randomness of stochastic generation during inference, and all generated samples may be truncated to a maximum length of one minute to reduce computational cost.

The symbolic music generation system 100 using a large language model according to an embodiment of the present invention and the symbolic music generation method implemented by the system, which have the configuration as described above, may have their performance evaluated according to the initialization method of the structural embeddings.

A symbolic music generation model equipped with structural embeddings randomly initialized according to the first initialization method is referred to as GPT2-RE, and a model equipped with structural embeddings initialized according to the second initialization method is referred to as GPT2-SE, such that their performances may be compared with that of GPT2, which is a vanilla language model not equipped with structural embeddings.

As a result of qualitative evaluation for the three models, it was confirmed that the model ("GPT2-RE") that used the four types of structural embeddings randomly initialized showed the best qualitative performance, followed by the model ("GPT2-SE") in which the time-related embeddings were initialized with sinusoidal encoding, and the model ("GPT2") that did not use any of the four embeddings received the lowest score.

Quantitatively, it was confirmed that GPT2-SE received the highest scores followed by GPT2-RE, while GPT2 was the lowest, in a metric (structure indicator; SI) indicating how repetitive note patterns are and a metric (chord progression variation rationality; CPVR) indicating how well chord progressions follow a distribution of a ground truth (GT) dataset and how typical they are.

Therefore, it was confirmed that when additional embeddings are combined, music generation performance of the symbolic music generation model is further improved, and that, on the other hand, an improvement in quality beyond simple repetitiveness of patterns or typicality of chord progressions is required to receive a higher qualitative evaluation.

Additionally, since the method (the second initialization method) of initializing the time-related embeddings using sinusoidal encoding showed a tendency to create more repetitive patterns in relatively shorter sections compared to the method (the first initialization method) of random initialization, it was confirmed that the second initialization method may be highly useful when creating music that requires repetitive patterns.

Accordingly, when implementing and using the symbolic music generation model, practicality of the symbolic music generation system 100 may be increased by differently selecting an embedding initialization method according to which characteristics of music a user wants to create.

Meanwhile, in embodiments of the present invention, the present invention may be implemented as an application specific integrated circuit (ASIC) that is manufactured to meet special functions for a specific application field and device.

The ASIC may also be referred to as an application specific semiconductor, and unlike a standard semiconductor, which has a fixed specification and can be applied to any electronic product or application once certain requirements are satisfied, the application specific semiconductor is used for a specific product or function and is an integrated circuit manufactured by a semiconductor manufacturer according to a specific order. That is, the application specific semiconductor is designed and manufactured to perform only functions required for a specific device or a specific function, and the application specific semiconductor may be broadly classified, according to a design method, into a full custom IC in which circuits are designed and manufactured from the beginning according to user requirements, and a semicustom IC in which circuits are designed and manufactured by partially using standardized designs.

The application specific semiconductor is mainly used in communication systems, high-performance computing systems, consumer electronic products, automobiles, industrial automation, medical devices, military, aerospace industries, and the like, and has recently been applied to AI semiconductors that execute large-scale computation required for implementing AI with high performance and power efficiency.

The application specific semiconductor is used as a core component such as a network router, a switch, or a modem in the communication system, and performs data packet processing, protocol conversion, signal processing, and the like to provide high throughput and low latency. In the high-performance computing system, the ASIC is used as a core component for high-speed processing and parallel processing, and in the consumer electronic products such as digital cameras, smartphones, tablets, game consoles, and the like, the ASIC provides a high-performance and low-power solution required to perform a specific function. In the automotive industry, the ASIC is used to control various electronic systems inside an automobile, and in industrial automation systems, the ASIC provides a solution for high-precision control and high-performance processing.

The ASIC to which an embodiment of the present invention is applied may include a memory in which an individual memory interface (I/F) is implemented, and may include a plurality of functional blocks that request memory access. Each functional block may be a direct memory access (DMA) functional block, a processor, a video processor, a cache controller, a decompression block, or a data path block. A basic configuration of the ASIC may include a transistor that amplifies or switches electrical signals, a logic gate which is a circuit combining transistors to perform a logical function, a memory cell that stores data, an analog circuit which is a circuit combining transistors to process a continuous voltage or current, and an intellectual property core (IP core) such as a microprocessor, a DSP, or a graphic core that is pre-designed to perform a specific function.

The ASIC may further include an individual memory interface (I/F) interfacing with an individual memory and an embedded memory interface (I/F) interfacing with an embedded memory, and the individual memory I/F may be connected to each functional block to receive memory access signals (e.g., control signals, address signals, and data signals) and generate signals for controlling the individual memory based on these input signals. The embedded memory I/F may be connected to each functional block to receive memory access signals (e.g., control signals, address signals, and data signals) and may generate modified memory access signals for controlling the embedded memory based on these input signals. The individual memory I/F and the embedded memory I/F may be designed in a memory control block of the ASIC to provide a memory control structure capable of being flexibly applied to both the individual memory and the embedded memory.

In addition, the ASIC for an ANN may include a plurality of neurons and a plurality of synapse circuits arranged in an array, each neuron including a register, a microprocessor, and at least one input, and each synapse circuit being configured to include a memory for storing synapse weights. Here, each neuron of the ASIC may be connected to at least one other neuron through one of the plurality of synapse circuits.

Although the present disclosure has been described as being generally implementable by a computing device, it will be understood by those skilled in the art that the present disclosure may be implemented in combination with computer-executable instructions and/or other program modules that can be executed on one or more computers, and/or by a combination of hardware and software.

Those skilled in the art to which the present disclosure pertains will understand that information and signals may be represented using any of a variety of different technologies and techniques. For example, data, commands, instructions, information, signals, bits, symbols, and chips that may be referred to in the above description may be represented by voltages, currents, electromagnetic waves, magnetic fields or particles, optical fields or particles, or any combination thereof.

Those skilled in the art to which the present disclosure pertains will understand that various exemplary logic blocks, modules, processors, means, circuits, and algorithm operations described in connection with the embodiments disclosed herein may be implemented by electronic hardware, various forms of programs or design codes (which are referred to herein, for convenience, as software), or a combination of thereof. To clearly describe such interchangeability of hardware and software, various exemplary components, blocks, modules, circuits, and operations have been generally described above in relation to their functions. Whether such functions are implemented as hardware or software depends upon design constraints imposed on a specific application and an overall system. Those skilled in the art to which the present disclosure pertains can implement the functions described in various ways for each specific application, and such implementation decisions should not be interpreted as being outside the scope of the present disclosure.

The various embodiments suggested herein may be implemented as methods, apparatuses, or articles manufactured using standard programming and/or engineering techniques. The term "article manufactured" includes a computer program, a carrier, or a medium that can be accessed from any computer-readable storage device. For example, the computer-readable storage medium may include a magnetic storage device (e.g., a hard disk, a floppy disk, a magnetic strip, etc.), an optical disk (e.g., a CD, a DVD, etc.), a smart card, and a flash memory device (e.g., an EEPROM, a card, a stick, a key drive, etc.), but is not limited thereto. In addition, the various storage media described herein may include one or more devices and/or other machine-readable media for storing information.

According to one embodiment of the present invention, it is possible to provide a symbolic music generation system capable of more effectively reproducing structural characteristics of music, by applying four types of structural embeddings constructed from digital music protocol data (e.g., MIDI data) to a large language model.

In addition, there is an effect in that music having characteristics desired by a user can be generated, by changing a method of initializing a structural embedding of digital music protocol data.

It should be understood that the specific order or hierarchy of operations in the suggested processes are an example of exemplary approaches. Based on design priorities, it should be understood that the specific order or hierarchy of the operations in the processes may be rearranged within the scope of the present disclosure. The accompanying method claims provide elements of various operations in a sample order but are not meant to be limited to the suggested specific orders or hierarchies.

The description of the suggested embodiments is provided so that any person skilled in the art to which the present disclosure pertains may use or practice the present disclosure. Various modifications to these embodiments will be apparent to those skilled in the art to which the present disclosure pertains, and the general principles defined herein may be applied to other embodiments without departing from the scope of the present disclosure. Therefore, the present disclosure is not limited to the embodiments suggested herein, but should be construed in the widest scope consistent with the principles and novel features suggested herein.

## Claims

1. A system for generating symbolic music using a language model, the system comprising:
at least one processor; and
at least one memory configured to store instructions or information executed by the at least one processor,
wherein
operations performed by the instructions or information executed by the processor comprise:
encoding music data to generate input tokens from input digital music protocol data;
performing one or more structural embeddings from the input tokens; and
generating a next output token by concatenating a result of an input token embedding and a result of the structural embedding and inputting the result into the language model,
wherein
the one or more structural embeddings are initialized before the language model starts training.

2. The system of claim 1, wherein
the input tokens comprise at least one of:
N×M note-on tokens composed of N velocities and M pitch numbers;
a note-off token having a velocity of 0;
a time-shift token; and
a special token for adjusting a beginning of a sentence, an end of a sentence, and a length of a sentence.

3. The system of claim 1, wherein
the one or more structural embeddings comprise at least one of:
a part embedding indicating which time part of an entire music the input token is located in;
a type embedding indicating that a type of the input token is one of a note-on token, a note-off token, a time-shift token, or a special token;
a time embedding indicating an elapsed time after the time-shift token of the input token; and
a Pitch-Class (PC) embedding indicating a PC of the note-on token or the note-off token.

4. The system of claim 1, wherein
the one or more structural embeddings are initialized by using one of:
a first initialization method of randomly initializing all vectors of the one or more structural embeddings; and
a second initialization method of initializing a time-related embedding among the one or more structural embeddings by using sinusoidal encoding and applying the first initialization method to a non-time-related embedding.

5. The system of claim 4, wherein
the first initialization method comprises a method of initializing all vectors of the one or more structural embeddings by using a truncated normal distribution.

6. The system of claim 4, wherein
the one or more structural embeddings comprise at least one of:
a part embedding indicating which time part in an entire music the input token is located in;
a type embedding indicating that a type of the input token is one of a note-on token, a note-off token, a time-shift token, or a special token;
a time embedding indicating an elapsed time after the time-shift token of the input token; and
a PC embedding indicating a PC of the note-on token or the note-off token, and
the second initialization method comprises:
a method of applying sinusoidal weights to the part embedding and the time embedding to preserve continuity of sequential musical properties of notes and pitches; and
a method of initializing the type embedding and the PC embedding by using a truncated normal initialization.

7. The system of claim 4, wherein
embeddings input to the language model comprise the input token embedding, the one or more structural embeddings, and a positional embedding initialized by the first or second initialization method.

8. A method for generating symbolic music using a language model that generates music through a large language model, the method for generating symbolic music being executed by at least one processor, the method comprising:
encoding music data to generate input tokens from input digital music protocol data;
performing one or more structural embeddings from the input tokens; and
training to generate a next output token by concatenating a result of an input token embedding and a result of the structural embedding and inputting the result into the language model,
wherein
the one or more structural embeddings are initialized before the language model starts training.

9. The method of claim 8, wherein
in the encoding, the input tokens comprise at least one of:
N×M note-on tokens composed of N velocities and M pitch numbers;
a note-off token having a velocity of 0;
a time-shift token; and
a special token for adjusting a beginning of a sentence, an end of a sentence, and a length of a sentence.

10. The method of claim 8, wherein
in the performing of the structural embeddings, the one or more structural embeddings comprise, for the input token, at least one of:
a part embedding indicating which time part in an entire music the input token is located in;
a type embedding indicating that a type of the input token is one of a note-on token, a note-off token, a time-shift token, or a special token;
a time embedding indicating an elapsed time after the time-shift token of the input token; and
a PC embedding indicating a PC of the note-on token or the note-off token.

11. The method of claim 8, wherein
the one or more structural embeddings, which are initialized before the language model starts training, are initialized by using one of:
a first initialization method of randomly initializing all vectors of the one or more structural embeddings; and
a second initialization method of initializing a time-related embedding among the one or more structural embeddings by using sinusoidal encoding and applying the first initialization method to a non-time-related embedding.

12. The method of claim 11, wherein
the first initialization method comprises a method of initializing all vectors of the one or more structural embeddings by using a truncated normal distribution that is initialized in the form of a probability distribution in which values smaller than a minimum value or greater than a maximum value are removed from a normal distribution.

13. The method of claim 11, wherein
the one or more structural embeddings comprise, for the input token, at least one of:
a part embedding indicating which time part in an entire music the input token is located in;
a type embedding indicating that a type of the input token is one of a note-on token, a note-off token, a time-shift token, or a special token;
a time embedding indicating an elapsed time after the time-shift token of the input token; and
a PC embedding indicating a PC of the note-on token or the note-off token, and
the second initialization method comprises:
a method of applying sinusoidal weights to the part embedding and the time embedding to preserve continuity of sequential musical properties of notes and pitches; and
a method of initializing the type embedding and the PC embedding by using a truncated normal initialization.

14. The method of claim 11, wherein
in the training, embeddings input to the language model comprise the input token embedding, the structural embedding, and a positional embedding initialized by the first or second initialization method.

15. A program stored in a non-transitory computer-readable recording medium for executing the method of any one of claims 8 to 14 on a computer.
